Europäisches Patentamt

European Patent Office

Office européen des brevets

(19)

(11) **EP 1 562 273 A2**

(12) # EUROPEAN PATENT APPLICATION

(43) Date of publication:
**10.08.2005 Bulletin 2005/32**

(51) Int Cl.[7]: **H02J 7/14**

(21) Application number: **05001572.6**

(22) Date of filing: **26.01.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **05.02.2004 JP 2004029359**

(71) Applicant: **HONDA MOTOR CO., Ltd.**
**Tokyo 107-8556 (JP)**

(72) Inventors:
• **Eguchi, Hiroyuki**
  **1-4-1 Chuo, Wako-shi, Saitama 351-0193 (JP)**
• **Shimizu, Motohiro**
  **1-4-1 Chuo, Wako-shi, Saitama 351-0193 (JP)**

(74) Representative: **HOFFMANN - EITLE**
  **Patent- und Rechtsanwälte**
  **Arabellastrasse 4**
  **81925 München (DE)**

(54) **Power supply apparatus**

(57)    The power supply apparatus is directed to enable a battery to be properly controlled for charging/discharging.

A detection unit (21) detects battery voltage V, battery current I and battery ambient temperature T. A battery capacity calculation device (23) and a discharging rate calculation unit (25) estimate battery capacity and discharging rate respectively. A discharge-allowable-duration calculation unit (26) calculates discharge-allowable-duration. Thisdischarge-allowable-duration is used for restriction the discharge-duration of the battery (6). The battery (6) is chargedwith the output of the generator. Charging current is restricted in accordance with upper-limit-charging-current that is calculated in an upper-limit-charging-current calculation unit (27).

Fig. 2

## Description

The present invention relates to a power supply apparatus, particularly to the power supply apparatus that is capable of supplementing electric output of a generator driven by an engine reasonably with electric power of a battery.

A power generating apparatus, such as a generator driven by an engine, is widely used as a power supply apparatus for various kinds of uses such as portable use and emergency one. In the case of the power supply apparatus with relatively low output, when this power supply apparatus is connected to a load such as a mercury lamp load or an electric motor load, wherein heavy current flows transiently at the time of starting, an overload state occurs transiently. This overload state causes the engine and generator to reduce the rotation thereof, and a stall may happen as a result. Describing more precisely, the transient overload state causes the engine to reduce the rotation thereof, which causes the generator to reduce the output thereof, so that the overload state becomes deeper. This vicious cycle results in the stall mentioned above. Therefore, the inductive load like the electric motor load has been limited below about 1/3 of the rating of the engine generator.

Meanwhile, an inverter generator has been disclosed in Japanese Patent Application Laid-Open No. 2003-102200, in which the generator is supplemented the amount of underpower thereof with power from a battery at the time of overloading so as to regulate the transient overload as well as the lag in load following due to this overload.

The generator as described in the aforementioned Japanese Patent Application Laid-Open No. 2003-102200, in which the generator is adapted to be supplemented the amount of underpower thereof with power from a battery at the time of overloading, requires a battery control system, the function of which is to charge successively automatically in response to the state of battery in order to avoid the over-discharge from the battery. However, since the battery tends to cause serious deterioration in long-termuse and is sensitive to the influence of environment like temperature, the over-discharge can not be fully prevented by such a battery control as to take into account only the quantity of electric charge that is to be taken out and charged, in which the charging is carried out in response only to the detection of undervoltage or the consumption is regulated without variation on the basis of an indicated capacity.

In addition, when the battery is used also as an engine-starter battery, it is required to supply power from the battery to the load while maintaining the capacity of the battery, which is necessary for starting the engine-starter motor.

Alternatively, it is conceivable that a battery having a suitable capacity is selected from among batteries with various capacities and replaced in response to the magnitude of the load to be connected. However, in this case, the battery control must be carried out by setting charging/discharging levels with respect to the replaced battery whenever the battery is replaced. Therefore, this approach is found to have problems because the setting mentioned just above is not only troublesome but also difficult to be carried out properly.

In consideration of the problems described above, it is an object of the present invention to present a power supply apparatus wherein a battery is permitted to be checked under the current working conditions thereof, and the battery control such as charging/discharging properly in response to the battery is possible, whatever battery would be connected.

In order to accomplish the object, the first aspect of this invention is that an power supply apparatus comprising a generator driven by an engine, a control circuit for supplying an output of the generator to a load, and a battery serving as a source, the power supply apparatus supplying power taking out the output of the battery and the output of the generator to the load, wherein capacity and a discharging rate of the battery are estimated, a discharge-allowable-duration corresponding to an output of the battery is calculated based on the estimation, the takeout of the output from the battery is stopped at the time when the discharge-allowable-duration becomes lower than a predetermined period of time, and the battery is charged with the output from the generator.

Also, the second aspect of this invention is that the power supply apparatus according to the first aspect, comprising a detection unit that monitors the battery voltage, the battery current and the battery ambient temperature, wherein internal resistance of the battery is estimated from time dependent variations in the battery voltage and the battery current, the battery capacity is estimated based on the internal resistance, electromotive voltage of the battery at the time of operation is estimated from the internal resistance, the battery voltage, the battery current and the battery ambient temperature, and the battery discharging rate is estimated from the electromotive voltage.

Also, the third aspect of this invention is that the power supply apparatus according to the first aspect, wherein an allowable upper limit of the charging current is calculated from the capacity and the discharge rage of the battery, and the charging current to the battery is controlled according to the allowable upper limit of the charging current.

Also, the fourth aspect of this invention is that the power supply apparatus according to the first aspect, wherein a warning indication is issued when either the battery capacity or the discharging rate falls outside an allowable value.

Also, the fifth aspect of this invention is that the power supply apparatus according to the first aspect comprising: a rectifier circuit for rectifying the output of the generator; an inverter for converting the output of the rectifier circuit into alternating current power with a predetermined frequency and outputting this AC power to the load side; a DC-DC converter for outputting the output of the battery to an input side of the inverter; wherein the power supply apparatus takes out output from the battery instead of the generator for supplying the power to the load when the load current is lower than a predetermined value.

Also, the sixth aspect of this invention is that the power supply apparatus according to the fifth aspect, wherein the engine is started automatically when the discharge-allowable-duration becomes lower than a predetermined value, and the battery is charged with the power output from the generator.

Also, the seventh aspect of this invention is that the power supply apparatus according to the fifth aspect, wherein the DC-DC converter is a two-way DC-DC converter.

According to the first aspect of the present invention, the output of the generator can be supplemented reasonably with the power from the battery.

Further, according to the second aspect of the present invention, since the battery is adapted to be checked under the current working conditions thereof, the battery control such as charging/discharging in response to the battery conditions is possible, whatever battery would be connected.

Still further, according to the third aspect of the present invention, the charging current can be controlled within an appropriate range, the overcharging can be prevented, and the power supply apparatus can be operated with a high degree of efficiency.

Yet further, according to the fourth aspect of the present invention, a warning is issued on the basis of the battery capacity and the discharge rate, so that the over-discharge can be prevented.

Yet further, according to the fifth aspect of the present invention, when the load is light, the power is adapted to be supplied from the battery to the load so that the power supply to the load can be executed efficiently without using the output from the engine generator.

Yet further, according to the sixth aspect of the present invention, when the battery capacity becomes insufficient, this battery is adapted to be charged by starting the engine generator, and since the engine generator is operated intermittently corresponding to the amount of the load to handle the inadequate power of the battery, the operation efficiency of the engine generator can be enhanced when the load is light.

Yet further, according to the seventh aspect of the present invention, the takeout of the power from the battery and the charging to the battery can be carried out simply and reliably through a same circuit.

**BRIEF DESCRIPTION OF THE DRAWINGS**

Fig. 1 is a block diagram illustrating the concepts of the power supply apparatus according to the present invention.
Fig. 2 is a block diagram illustrating the concepts of an embodiment of the battery control.
Fig. 3 is a circuit diagram illustrating an embodiment of the specific circuit of the power supply apparatus according to the present invention.

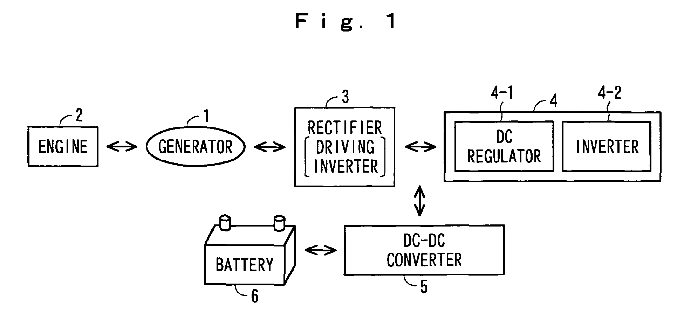

Hereinafter, the present invention will be described in detail referring to the attached drawings. Fig. 1 is a block diagram illustrating the concepts of the power supply apparatus according to the present invention. Referring to Fig. 1, a generator 1 is, for example, a three-phase multipolar magnet generator. The generator 1 is an engine generator which is connected to, and driven by, the engine 2. In turn, this generator can serve also as an engine-starter motor, that is, this generator is a dual-purpose generator both for a generator function and for an electric motor function.

A rectifier 3 serves to rectify the output from the generator 1. Also, the rectifier 3 functions as a driving inverter that converts the DC voltage given from the output side thereof into the three-phase AC voltage and applies this AC voltage to the generator 1.

A power converter 4 comprises a DC regulator 4-1 and an inverter 4-2, and serves to convert the output from the rectifier circuit 3 or a DC-DC converter 5, which will be described hereinafter, into alternating-current power having a predetermined frequency and to output this AC power to the load side. Note that the DC regulator 4-1 of the power converter 4 blocks the inverter 4-2 from being influenced by the variation in the output from the DC-DC converter 5.

The DC-DC converter 5 serves to boost the voltage of a battery 6, and to output this boosted DC voltage to the output side of the rectifier circuit 3. When the power supplying capacity of the battery 6 becomes insufficient in comparison with the load, the DC-DC converter 5 stops to take out the output from the battery 6, and charges the battery 6 with the output from the generator 1 after converting the output thereof.

Hereinafter, the battery 6 side of the DC-DC converter 5 can be called the primary side, and the rectifier circuit 3 side thereof can be called the secondary side. Further, the battery 6 is, for example, a 12V battery which has been generally used for driving a self starter.

Next, the operations in Fig. 1 will be explained. Note that, hereinafter, the power supply from the generator 1 driven by the engine 2 to the load is designated as the "generator-generation" and the power supply from the battery 6 to the load is designated as the "battery-generation".

When the load is light, that is, the load current is below a predetermined value, the output of the battery 6 is subjected to DC-DC conversion through the DC-DC converter 5 and further subjected to conversion to AC power having a predetermined frequency through the power converter 4, and supplied to the load.

This state of the battery-generation is subjected to battery control, which will be described hereinafter, at all times. When the power supplying capacity of the battery 6 drops to an insufficient level in comparison with the load as a result of taking out the output from the battery 6, the taking out of the output from the battery 6 is made to stop, that is, the battery-generation is made to stop. At the same time, the engine 2 is made to start automatically, so that the battery-generation is replaced by the generator-generation.

When the engine 2 is to be started, the DC voltage of the battery 6 is boosted by the DC-DC converter 5, and this boosted DC voltage is supplied to the driving inverter (rectifier circuit) 3. The driving inverter 3 is driven for switching by the actuation command so as to convert the DC voltage into the three-phase AC voltage and supply this AC voltage to the generator 1. As such, the generator 1 is actuated as the engine-starter motor. Therefore, even when the power supplying capacity of the battery 6 drops, the capacity that is enough for starting the engine 2 is required to be reserved.

Once the engine 2 is started, the generator 1 is driven by the engine 2. And the driving inverter 3 stops the switching operation thereof and functions in turn as the rectifier circuit. The output from the generator 1 is rectified through this rectifier circuit (driving inverter) 3, then converted through the DC regulator 4-1 of the power converter 4, then converted to AC power with a predetermined frequency through the inverter 4-2, and supplied to the load. On the other hand, the battery 6 is charged with the output from the rectifier circuit 3 through the DC-DC converter 5.

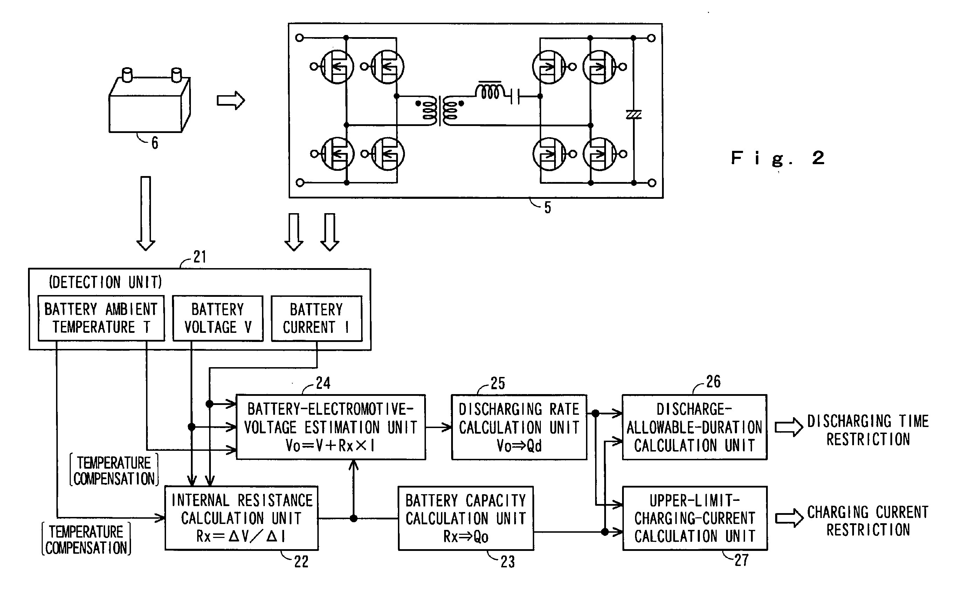

Fig. 2 is the block diagram illustrating the concepts of an embodiment of the battery control. In order to recognize the conditions of the battery 6, the battery voltage V, the battery current I (the consumption current and the charging current) and the battery ambient temperature T are detected by the detection unit 21. Note that the aforementioned battery ambient temperature T denotes the temperature of the surroundings where the battery 6 is disposed. In regard to this embodiment, the temperature is detected at a portion of an electronic circuit unit board disposed adjacent to the battery 6, the portion of which does not include anything of heating components. The battery control based on the battery voltage V, the battery current I and the battery ambient temperature T, which will be described hereinafter, is to be executed through a software or a hardware.

Firstly, an internal resistance calculation unit 22 calculates the internal resistance Rx from the time dependent variations in the battery voltage V and the battery current I. This internal resistance Rx can be derived from the following equation (1), where the time dependent variations in the battery voltage V and the battery current I are $\Delta V$ and $\Delta I$ respectively:

$$Rx = \Delta V/\Delta I \qquad (1)$$

After being compensated with the battery ambient temperature T, the internal resistance Rx is input into a battery capacity calculation unit 23, which estimates the current capacity Qo of the battery 6 by the use of a capacity conversion map (table). Since the internal resistance Rx has been compensated for temperature with the battery ambient temperature T, the estimated capacity Qo through the battery capacity calculation unit 23 is also compensated for temperature.

Further a battery-electromotive-voltage estimation unit 24 estimates the electromotive voltage of the battery 6 Vo on the basis of the battery voltage V, the battery current I and the internal resistance Rx of the battery 6 from the following equation (2). Note that the battery voltage compensated for temperature with the battery ambient temperature T is substituted for the battery voltage V in the equation (2) at this estimation.

Next, a discharging rate calculation unit 25 estimates the discharging rate Qd of the battery 6 from the estimated electromotive voltage Vo by the use of a discharging rate conversion map. Since the battery voltage V has been compensated for temperature with the battery ambient temperature T, the estimated discharging rate Qd through the discharging rate calculation unit 25 is also compensated for temperature.

$$Vo = V + Rx \times I \qquad (2)$$

Both of the estimated capacity Qo and the estimated discharging rate Qd of the battery 6 represent the current conditions of the battery 6, hence, the charging/discharging of the battery 6 can be controlled on the basis of these factors. Specifically, the battery capacity Qo and the discharging rate Qd are input into a discharge-allowable-duration calculation unit 26 so as to obtain the discharge-allowable-duration by the use of a discharging-allowable-duration map. Further, the battery capacity Qo and the discharging rate Qd are input into an upper-limit-charging-current calculation unit 27 so as to obtain the upper-limit-charging-current (the allowable upper limit of the charging current) by the use of an upper-limit-charging-current map.

Hereupon, the discharge-allowable-duration represents a time period that is allowed for taking out the output from the battery 6, and the upper-limit-charging-current represents an appropriate current for charging the battery 6. The discharging time period restriction and the charging current restriction are executed on the basis of these factors.

A target for the discharge-allowable-duration is predetermined, and when the calculated discharge-allowable-duration becomes lower than this target discharge-allowable-duration, takeout of the output from the battery 6 is stopped, in other words, the battery-generation is stopped. At the same time, in turn, the engine 2 is actuated automatically and the generator-generation starts up so that the output from the generator 1 side comes to charge the battery 6.

At this time, the charging current is controlled as closely as possible toward the upper-limit-charging-current that is obtained as mentioned hereinabove. This is beneficial for operating the generator with efficiency. At this time, also, the battery 6 is determined if this battery 6 is degraded, or if this battery 6 has insufficient power supply capacity from the results of detection on the battery capacity or the abnormality in the discharging rate. A warning of the battery error may be indicated according to this determination.

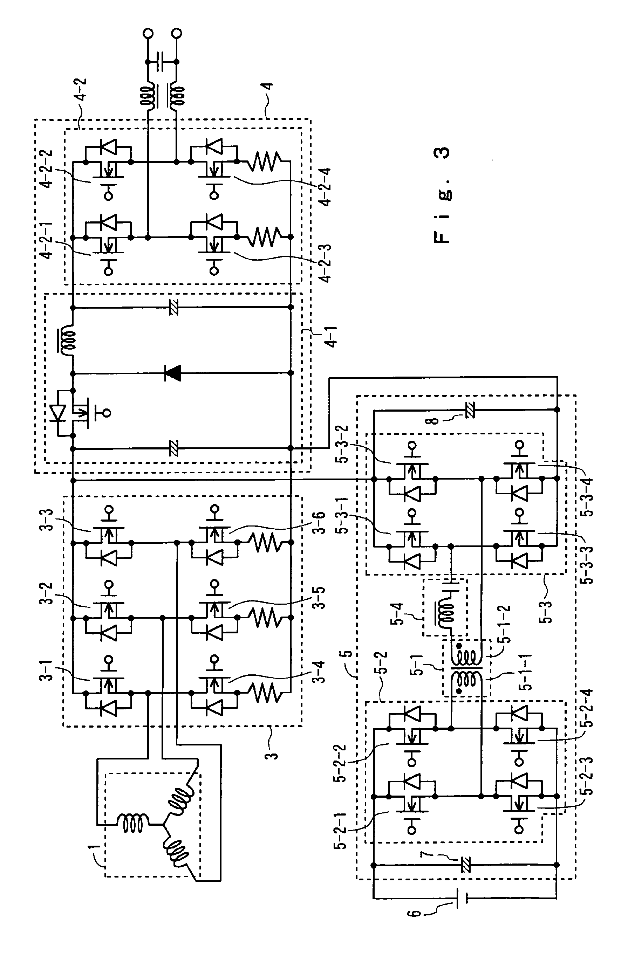

Fig. 3 illustrates an embodiment of the specific circuit of the power supply apparatus according to the present invention. In Fig. 3, the same or equivalent components to those in Fig. 1 are denoted with the same numerals. A three-phase generator 1 is connected to an engine (not shown). The output side of the generator 1 is connected to a rectifier circuit (driving inverter) 3. Respective rectifying elements (diodes) of the rectifier circuit 3 are connected in parallel with switching elements (designated as FET hereinafter) such as FETs 3-1 to 3-6. These FETs 3-1 to 3-6 convert DC voltage into three-phase AC voltage through ON/OFF actions thereof, so that these FETs constitute a driving inverter that applies this AC voltage to the generator 1.

Note that the rectifying element, which constitutes the rectifier circuit 3, may comprise a parasitic diode that is a switching element such as an FET or a junction diode that is connected separately.

A DC regulator 4-1 of a power converter 4 comprises, for example, an FET, a choke coil, a capacitor and a diode. The FET is PWMmodulated to make the output of the rectifier circuit 3 smooth and regulate. An inverter 4-2 comprises, for example, four of FETs 4-2-1 to 4-2-4 that are in a bridge connection.

A DC-DC converter 5 enables the exchange of power bilaterally between the battery 6 and the output side of the rectifier circuit 3, and comprises a transformer 5-1 having low-voltage-side windings 5-1-1 in the primary side and high-voltage-side windings 5-1-2 in the secondary side. The control of charging/discharging of the battery 6 is executed through controlling the DC-DC converter 5 on the basis of the discharge-allowable-duration and the upper-limit-charging-current obtained as described hereinabove. In addition, a boosting ratio of the DC-DC converter 5 is determined based on a winding ratio of the low-voltage-side windings 5-1-1 to the high-voltage-side windings 5-1-2.

A low-voltage-side switching unit 5-2 is inserted into a side of the low-voltage-side windings 5-1-1, and a high-voltage-side switching unit 5-3 is inserted into a side of the high-voltage-side windings 5-1-2. The low-voltage-side switching unit 5-2 comprises, for example, four of FETs 5-2-1 to 5-2-4, which are in a bridge connection. Also, the high-voltage-side switching unit 5-3 comprises four of FETs 5-3-1 to 5-3-4.

Each of FETs 5-2-1 to 5-2-4 and 5-3-1 to 5-3-4 of the low-voltage-side switching unit 5-2 and the high-voltage-side switching unit 5-3 are connected in parallel with rectifying elements such as diodes. These rectifying elements may be parasitic diodes of an FET, or junction diodes that are connected separately. The low-voltage-side switching unit 5-2 and the high-voltage-side switching unit 5-3, both of which are in combination with the rectifying elements connected in parallel, can be regarded as switching/rectifying units respectively.

Further, a LC resonant circuit 5-4 is inserted into the side of the high-voltage-side windings 5-1-2 of the transformer 5-1. The LC resonant circuit 5-4 serves to regulate the wave form of the current thereof into a sinusoidal form, the current of which flows inside this circuit when at least one of the low-voltage-side switching unit 5-2 and the high-voltage-side switching unit 5-3 is driven. As a result, the LC resonant circuit 5-4 operates to reduce the switching loss and to prevent the breakdown of the FET by a heavy current. This is caused by the fact that the FET becomes possible to be made ON/OFF readily at a zero crossing of the current of a sinusoidal wave form. In addition, the LC resonant circuit 5-4 may be mounted not only in the secondary side but also in the primary side.

FETs 5-2-1 to 5-2-4 of the low-voltage-side switching unit 5-2 and FETs 5-3-1 to 5-3-4 of the high-voltage-side switching unit 5-3 are subjected to the switching control by a control circuit (not shown) comprising a CPU and the like. Note that the capacitors 7, 8 connected to the primary and the secondary sides are the capacitors for smoothing the output.

In regard to the low-voltage-side switching unit 5-2 and the high-voltage-side switching unit 5-3, the following arrangements are well known. That is, in the low-voltage-side switching unit 5-2, the pair of FETs 5-2-1 and 5-2-4 and the pair of FETs 5-2-2 and 5-2-3 are actuated in an alternating sequence to ON/OFF, and in the high-voltage-side switching unit 5-3, the pair of FETs 5-3-1 and 5-3-4 and the pair of FETs 5-3-2 and 5-3-3 are actuated in an alternating sequence to ON/OFF.

When FETs 3-1 to 3-6 of the driving inverter 3 are subjected to PMW driving in a known manner, the generator 1 can be operated as the engine-starter motor. At this process, FETs 3-1 to 3-6 can be put into a synchronous driving without sensors by means of phase discrimination, which is carried out by making use of variations in the current dividing due to the counter-electromotive voltage corresponding to the action of the generator (electric motor) 1. When FETs 3-1 to 3-6 are not driven, the driving inverter unit will serve as the rectifying circuit for the output of the generator 1.

In addition to the embodiments as described hereinabove, according to the present invention, the DC-DC converter 5 may be constituted as a two-way DC-DC converter wherein the primary and the secondary sides are driven by fully synchronized, namely, identical driving signals. This embodiment enables the DC-DC converter 5 to conduct two-way power conversion on the basis of a relative voltage difference between the primary and secondary sides caused by a winding ratio of the transformer. Further, according to this embodiment, the power supply from the battery 6 side and the charging the battery 6 become possible to be carried out simply and reliably in the same circuit.

## Claims

1. An power supply apparatus comprising a generator (1) driven by an engine (2), a control circuit for supplying an output of the generator (1) to a load, and a battery (6) serving as a source, the power supply apparatus supplying power taking out the output of the battery (6) and the output of the generator (1) to the load, wherein

    capacity and a discharging rate (Qo), (Qd) of the battery (6) are estimated,

    a discharge-allowable-duration corresponding to an output of the battery (6) is calculated based on the estimation,

    the takeout of the output from the battery (6) is stopped at the time when the discharge-allowable-duration becomes lower than a predetermined period of time, and

    the battery (6) is charged with the output from the generator (1).

2. The power supply apparatus according to claim 1, comprising a detection unit (21) that monitors the battery voltage, the battery current and the battery ambient temperature, wherein

    internal resistance (Rx) of the battery (6) is estimated from time dependent variations in the battery voltage and the battery current,

    the battery capacity (Qo) is estimated based on the internal resistance (Rx),

    electromotive voltage (Vo) of the battery (6) at the time of operation is estimated from the internal resistance (Rx), the battery voltage, the battery current and the battery ambient temperature, and

    the battery discharging rate (Qd) is estimated from the electromotive voltage (Vo).

3. The power supply apparatus according to claim 1, wherein an allowable upper limit of the charging current is calculated from the capacity (Qo) and the discharge rage (Qd) of the battery (6), and

    the charging current to the battery (6) is controlled according to the allowable upper limit of the charging current.

4. The power supply apparatus according to claim 1, wherein a warning indication is issued when either the battery capacity (Qo) or the discharging rate (Qd) falls outside an allowable value.

5. The power supply apparatus according to claim 1 comprising:

    a rectifier circuit (3) for rectifying the output of the generator (1);

    an inverter (4) for converting the output of the rectifier circuit (3) into alternating current power with a predetermined frequency and outputting this AC power to the load side;

    a DC-DC converter (5) for outputting the output of the battery (6) to an input side of the inverter (4); wherein

    the power supply apparatus takes out output from the battery (6) instead of the generator (1) for supplying the power to the load when the load current is lower than a predetermined value.

6. The power supply apparatus according to claim 5, wherein the engine (2) is started automatically when the discharge-allowable-duration becomes lower than a predetermined value, and the battery (6) is charged with the power output from the generator (1).

7. The power supply apparatus according to claim 5, wherein the DC-DC converter (5) is a two-way DC-DC converter.

Fig. 1

```
   ┌2                    ┌1                    ┌3              4-1    ┌4        4-2
┌────────┐        ┌───────────┐        ┌─────────────┐   ┌──────────────────────────────┐
│ ENGINE │  ◄─►  │ GENERATOR │  ◄─►  │  RECTIFIER  │◄─►│ ┌──────────┐  ┌──────────┐   │
└────────┘        └───────────┘        │ [ DRIVING ] │   │ │    DC    │  │ INVERTER │   │
                                       │ [ INVERTER] │   │ │ REGULATOR│  │          │   │
                                       └─────────────┘   │ └──────────┘  └──────────┘   │
                                              ◄►          └──────────────────────────────┘
                  ┌───────────┐        ┌─────────────┐
                  │  BATTERY  │  ◄─►  │    DC-DC    │
                  └───────────┘        │  CONVERTER  │
                        └6             └─────────────┘
                                              └5
```

Fig. 2

Fig. 3